# EUROPEAN PATENT APPLICATION

(11) **EP 4 726 649 A1**
(43) Date of publication of application: **15.04.2026**
(21) Application number: 24819184.3
(22) Date of filing: 24.05.2024
(51) Int. Cl.: G06T 7/00, G06V 10/82

(54) **FASTENING COMPONENT RECOGNITION METHOD**

(30) Priority: 07.06.2023 JP 2023094341
(71) Applicant: Panasonic Intellectual Property Management Co., Ltd., Kadoma-shi, Osaka 571-0057 (JP)
(72) Inventor: ISHIKURA, Tomoki, kadoma-shi, Osaka 571-0057 (JP); MIYAJI, Naoya, kadoma-shi, Osaka 571-0057 (JP)
(74) Representative: Novagraaf International SA
(86) International application number: PCT/JP2024/019156
(87) International publication number: WO 2024/252952

(57) **Abstract**

A coarse recognition is executed by outputting, as heat map (6), a position and a region of a fastening component from image data for automatic disassembly (5) of disassembly target object for recognition (4) based on coarse recognition deep learning model (12). The coarse recognition deep learning model is trained by learning fastening component (62) of learning data (56) of target object for learning data generation (51) based on fastening component data and learning a non-fastening component as non-fastening component data. The fastening component data is based on an image clipped by first fixed rectangle (66) centered on tool hole(62a) of the fastening component from the learning data. the non-fastening component data is based on an image clipped by a second fixed rectangle centered on an arbitrary point from the learning data. The second fixed rectangle is identical to the first fixed rectangle. A barycentric position for each region from the heat map of the fastening component is calculated. The fastening component from the image data for automatic disassembly is clipped by a third fixed rectangle centered on the barycentric position as fastening component image for fine recognition (7) A fine recognition is executed by determining whether or not the fastening component image for fine recognition is the fastening component of the disassembly target object for recognition.

## Description

### TECHNICAL FIELD

The present disclosure relates to a technique for automating a part of a disassembly process for a used product as an example of a disassembly target object, and relates to a fastening component recognition method in a disassembly target object having a fastening component that is different in a position or a state due to a model, corrosion, or the like.

### BACKGROUND ART

Due to economic activities of mass consumption and mass disposal, global environmental problems such as global warming and resource depletion have arisen.

Under such circumstances, the home appliance recycling law has been enforced in Japan since April 2001 in order to construct a resource circulation type society. The home appliance recycling law requires recycling of used home appliances (air conditioner, television, refrigerator, freezer, washing machine, clothing drying machine, and the like). Among recycling, horizontal recycling that uses collected used home appliances as materials for new home appliances is important in realizing a sustainable resource circulation type society. In order to realize this horizontal recycling, home appliance recycling factory need to perform disassembly of used home appliances for each fine material. As a result, used home appliances are manually disassembled in a home appliance recycling factory and collected for each material. Alternatively, after being crushed into small pieces by a crusher, the small pieces are sorted and recovered for each material type using magnetism, wind power, vibration, or the like, and are recycled as a recycled material.

In manual disassembly, since a housing, a circuit board, or the like of many home appliances is fixed by a plurality of fastening components, it is necessary to detach and disassemble these fastening components in order. Used home appliances to be disassembled have different sizes or different fastening places or fastening methods of members for each product, and also have different types or corrosion states of fastening components for each product or each use method. Therefore, grasping of the fastening component position depends on intuition or experience of the operator, and automation is very difficult. In particular, in order to realize automation of disassembling used home appliances by robots, it is necessary to recognize fastening components without missing them.

Under such circumstances, a technique of automating a part of a disassembly process for a used product as disclosed in PTL 1 and NPL 1 has been proposed.

Fig. 19 is a diagram illustrating a disassembly device described in PTL 1. In Fig. 19, display panel 101 is conveyed by conveyance unit 102, first fixing member detector 103 and second fixing member detector 104 detect a fixing portion of the housing, and fixing member disassembly unit 105 can release the fastening of the fastening component at the fixing portion, that is effective for automation of the disassembly process of the flat type television set and the like. In PTL 1, the fastening component can be detected from the color of the fastening component or the reflection amount of light, but when there are a plurality of colors of the fastening component, detection by deep learning shown in NPL 1 is common.

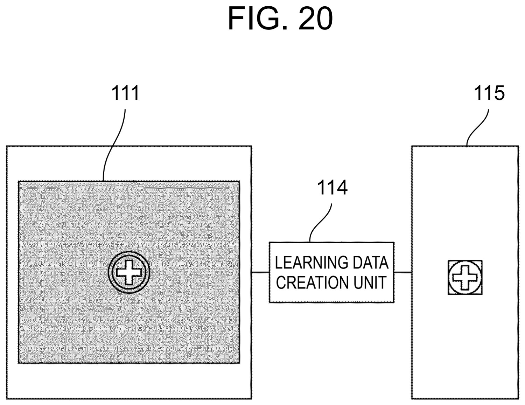

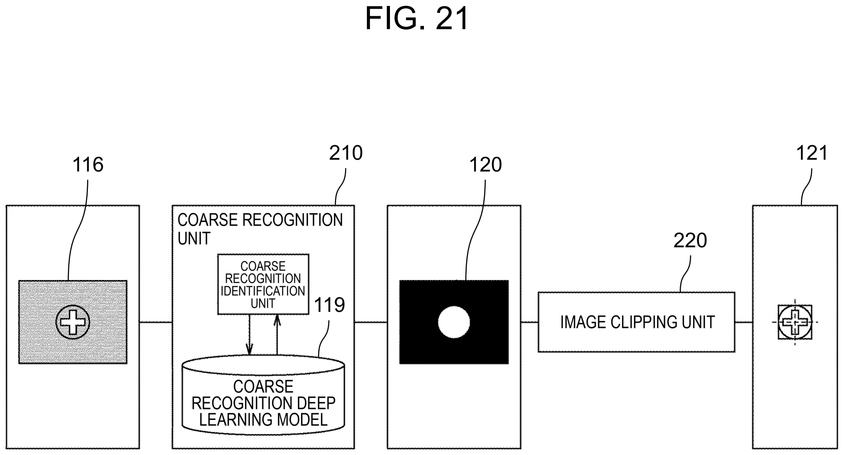

In NPL 1, it is possible to detect a fastening component by using a deep learning model created based on a fastening component image or the like acquired under a disassembly environment and characteristics such as a fastening place or a shape of the fastening component. Here, a fastening component learning data clipping method for generating a deep learning model in NPL 1 will be described with reference to a schematic diagram of a basic clipping method for learning data generation in NPL 1 in Fig. 20. In NPL 1, based on target object image for learning data generation 111, learning data creation unit 114 cuts a visible part of the outer shape of the fastening component with a circumscribed rectangle to generate image for learning data generation 115. A deep learning model and an image recognition method using image for learning data generation 115 will be described with reference to a schematic diagram of a basic fastening component recognition method in NPL 1 of Fig. 21. In the conventional method, entire disassembly target object image data 116 is input, and coarse recognition unit 210 outputs heat map 120 from coarse recognition deep learning model 119. Here, coarse recognition deep learning model 119 is created by being trained with image for learning data generation 115 as learning data in advance. Heat map 120 is image data that is created by determining whether or not each pixel is a fastening component based on entire disassembly target object image data 116, and indicating a determination result for the fastening component by a color density of 0 to 255 for each pixel. Heat map 120 is converted into a binary image based on a threshold value set in advance by image clipping unit 220, a contour is detected from the binary image, and the disassembly target object clipped image 121 is output as a circumscribed rectangle in contact with the contour.

The deep learning model generating method created based on the conventional fastening component image and the fastening component recognition method have been described above.

### Citation List

### Patent Literature

PTL 1: Japanese Patent No. 6051501

### Non-Patent Literature

NPL 1: Gwendolyn Foo, et al. "Screw detection for disassembly of electronic waste using reasoning and re-training of a deep learning model", in Procedia CIRP, 2021, ("URL: https://www.sciencedirect.com/science/article/pii/S2212827121002031").

### SUMMARY OF THE INVENTION

A recognition method according to one aspect of the present disclosure includes:
executing coarse recognition of outputting, as a heat map, a position and a region of a fastening component of a disassembly target object for recognition from image data for automatic disassembly based on a coarse recognition deep learning model,
   the image data for automatic disassembly being obtained by imaging a disassembly target object for recognition,
   the coarse recognition deep learning model being trained by learning a fastening component of learning data based on fastening component data, and learning a non-fastening component of the learning data based on non-fastening component data,
   the learning data being generated by imaging a target object for learning data generation different from the disassembly target object for recognition,
   the fastening component data being based on an image clipped by a first fixed rectangle centered on a tool hole of the fastening component from the learning data,
   the non-fastening component data being based on an image clipped by a second fixed rectangle centered on an arbitrary point from the learning data,
   the second fixed rectangle being identical to the first fixed rectangle; calculating a barycentric position for each region from the heat map of the fastening component of the disassembly target object for recognition,
clipping, by a third fixed rectangle centered on the barycentric position, the fastening component of the disassembly target object for recognition from the image data for automatic disassembly as a fastening component image for fine recognition, and
executing fine recognition of determining whether or not the fastening component image for fine recognition is the fastening component of the disassembly target object for recognition.

### BRIEF DESCRIPTION OF THE DRAWINGS

Fig. 1 is a configuration block diagram of a fastening component recognition device capable of performing a fastening component recognition method according to a first exemplary embodiment of the present disclosure.
Fig. 2 is a schematic diagram of the fastening component recognition device capable of performing the fastening component recognition method according to the first exemplary embodiment of the present disclosure.
Fig. 3 is a flowchart of the fastening component recognition method according to the first exemplary embodiment of the present disclosure.
Fig. 4 is a configuration block diagram illustrating creation of a coarse recognition unit deep learning model of the fastening component recognition method according to the first exemplary embodiment of the present disclosure.
Fig. 5 is a schematic diagram illustrating the coarse recognition unit deep learning model of the fastening component recognition method according to the first exemplary embodiment of the present disclosure.
Fig. 6 is a flowchart illustrating the coarse recognition unit deep learning model of the fastening component recognition method according to the first exemplary embodiment of the present disclosure.
Fig. 7 is a schematic diagram illustrating a method for clipping image data for coarse recognition deep learning model generation of the fastening component recognition method according to the first exemplary embodiment of the present disclosure.
Fig. 8 is a schematic diagram illustrating a coarse recognition unit of the fastening component recognition method according to the first exemplary embodiment of the present disclosure.
Fig. 9 is a configuration flowchart illustrating the coarse recognition unit of the fastening component recognition method according to the first exemplary embodiment of the present disclosure.
Fig. 10 is a schematic diagram illustrating a state where the entire disassembly target object image data and the heat map are superimposed in the fastening component recognition method according to the first exemplary embodiment of the present disclosure.
Fig. 11 is a schematic diagram illustrating an image clipping unit of the fastening component recognition method according to the first exemplary embodiment of the present disclosure.
Fig. 12 is a configuration flowchart illustrating an image clipping unit of the fastening component recognition method according to the first exemplary embodiment of the present disclosure.
Fig. 13 is a schematic diagram illustrating an image clipping unit fastening component image clipping method of the fastening component recognition method according to the first exemplary embodiment of the present disclosure.
Fig. 14 is a schematic diagram illustrating a fine recognition unit of the fastening component recognition method according to the first exemplary embodiment of the present disclosure.
Fig. 15 is a configuration flowchart illustrating a fine recognition unit of the fastening component recognition method according to the first exemplary embodiment of the present disclosure.
Fig. 16 is a configuration block diagram illustrating a fine recognition unit deep learning model of the fastening component recognition method according to a second exemplary embodiment of the present disclosure.
Fig. 17 is a schematic diagram illustrating the fine recognition unit deep learning model of the fastening component recognition method according to the second exemplary embodiment of the present disclosure.
Fig. 18 is a flowchart illustrating the fine recognition unit deep learning model of the fastening component recognition method according to the second exemplary embodiment of the present disclosure.

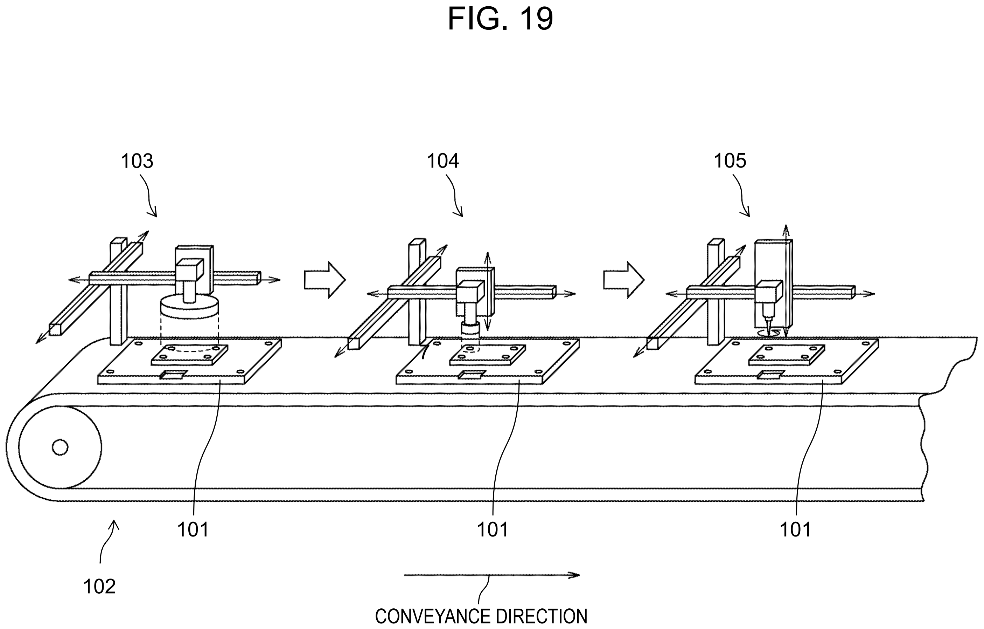

Fig. 19 is a view illustrating a disassembly device described in PTL 1.
Fig. 20 is a schematic diagram of a basic clipping method for learning data generation in NPL 1.
Fig. 21 is a schematic diagram of a basic fastening component recognition method in NPL 1.
Fig. 22 is a schematic diagram of a clipping method for learning data generation in NPL 1.
Fig. 23 is a schematic diagram of an image clipping method according to a conventional method in NPL 1.

### DESCRIPTION OF EMBODIMENT

In the configuration of PTL 1, for example, a product used outdoors is different from a state at the time of shipment such as rust, deformation, or damage, and thus, it is difficult to perform detection using normal image recognition and disassembly by a disassembly unit.

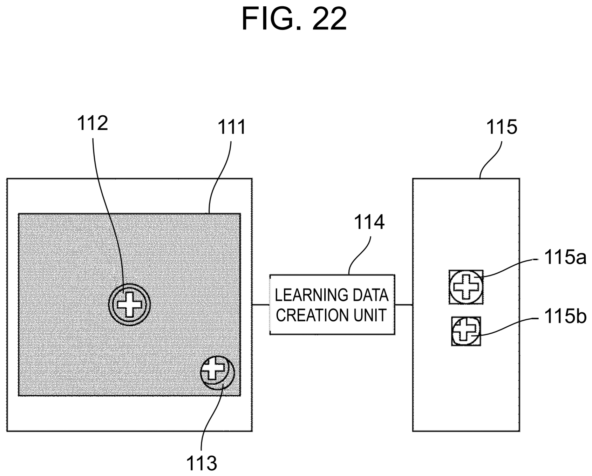

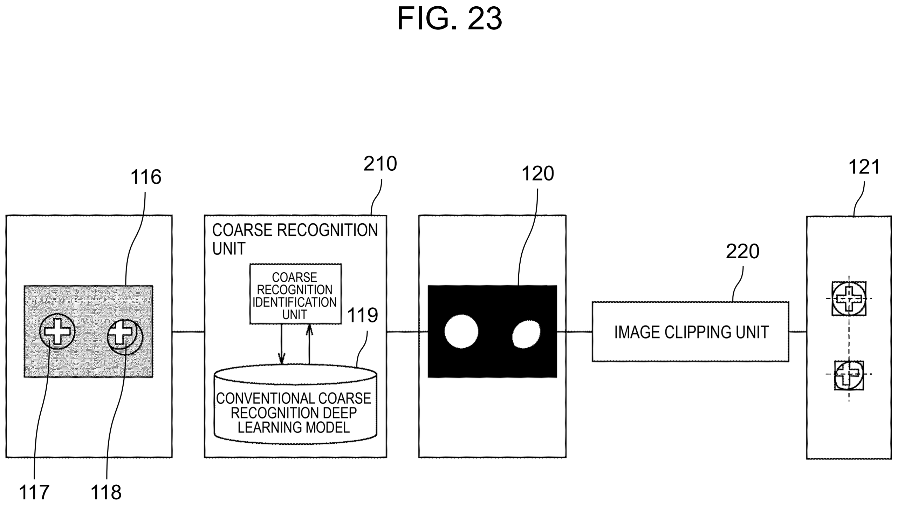

In addition, also in the fastening component recognition method of NPL 1, in order to recognize a wide variety of fastening components with high accuracy, it is necessary to improve recognition accuracy by combining a plurality of recognition methods. Here, a specific problem in the fastening component recognition method of NPL 1 will be described with reference to the schematic diagrams of Figs. 22 and 23. Target object image for learning data generation 111 of the used home appliance to be recognized includes image including entire outer shape of fastening component 112, and image including only part of outer shape of fastening component 113 due to rust, corrosion, a counterbore hole, or the like. In the clipping method for learning data generation of NPL 1, learning data creation unit 114 clips the outer shape of the fastening component with a circumscribed rectangle of a visible portion to generate image for learning data generation 115. Therefore, the image for learning data generation 115 includes clipped image 115a including the entire outer shape of the fastening component and a clipped image 115b including only a part of the outer shape of the fastening component. In a case where coarse recognition deep learning model 119 is created in advance using the image for learning data generation 115 and the fastening component is recognized, the following two problems occur in disassembly target object clipped image 121 in image including entire outer shape 117 of the fastening component included in entire disassembly target object image data 116 and image including only part of outer shape 118 of the fastening component.

First, since the circumscribed rectangle of the visible portion is clipped as the learning data, a central position of a fastening component tool hole of disassembly target object clipped image 121 varies depending on the visible portion of the fastening component.

Second, since image clipping unit 220 clips an image from the contour of the heat map, the size of the clipped image of disassembly target object clipped image 121 varies.

Since the above two problems occur, in a case where recognition by combining a plurality of recognition methods is performed, an image including only a part of a fastening component such as rust, deformation, damage, or a counterbore hole varies in a subsequent process, and it is difficult to recognize the fastening component with high accuracy.

The present disclosure has been made to solve the conventional problems, and an object of the present disclosure is to provide a recognition method that enables highly accurate recognition even in a case where a state of a fastening component is different, such as rust, deformation, or damage.

Hereinafter, an exemplary embodiment of the present disclosure will be described with reference to the drawings.

### (First exemplary embodiment)

### <Configuration of fastening component recognition device>

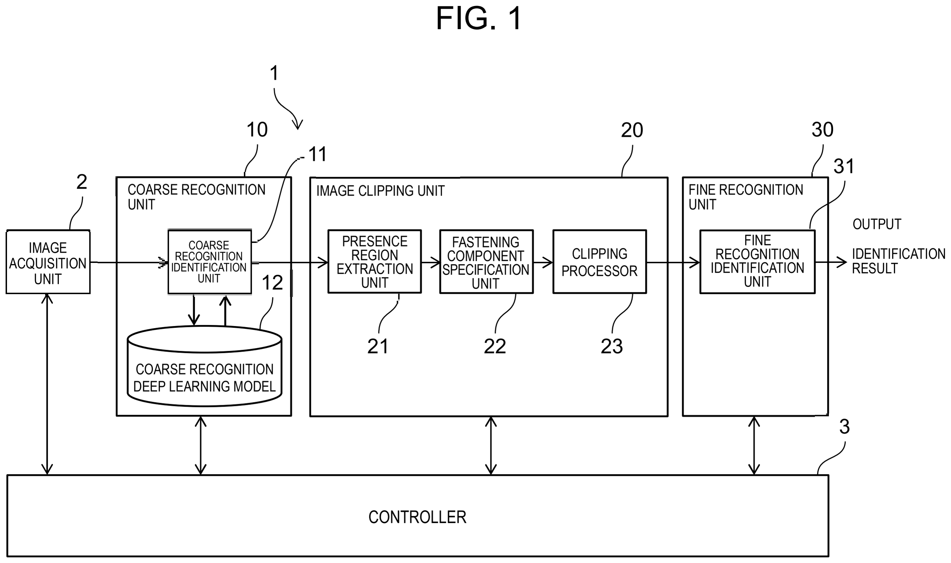

Fig. 1 is a block diagram illustrating a configuration of fastening component recognition device 1 capable of implementing a fastening component recognition method according to a first exemplary embodiment of the present disclosure. As illustrated in Fig. 1, fastening component recognition device 1 capable of implementing the fastening component recognition method according to the first exemplary embodiment includes image acquisition unit 2, controller 3, coarse recognition unit 10, image clipping unit 20, and fine recognition unit 30.

Image acquisition unit 2 is, for example, a camera, and captures an image of disassembly target object 4 or target object for learning data generation 51 on placement table 90 to generate entire disassembly target object image data 5 or learning data 56.

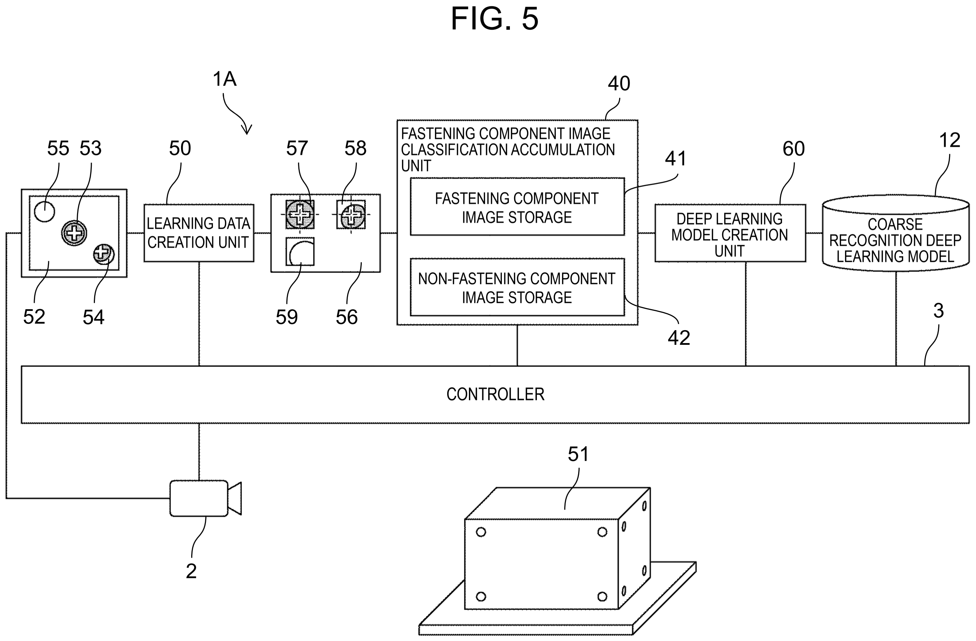

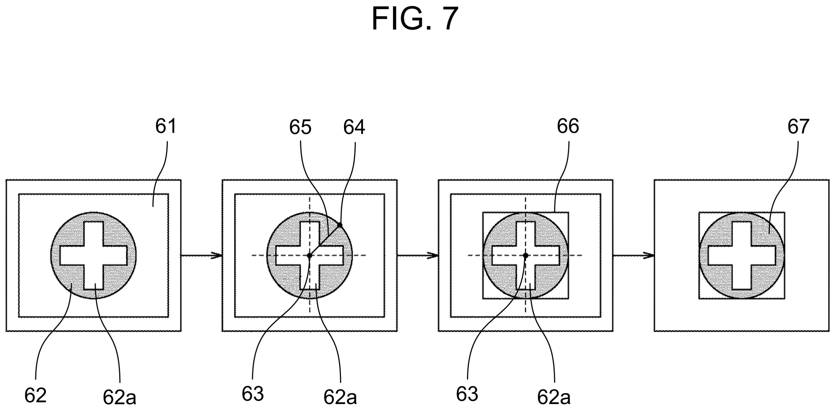

Coarse recognition unit 10 includes coarse recognition identification unit 11 and coarse recognition deep learning model 12. Coarse recognition unit 10 specifies a position of fastening component 4a of disassembly target object 4 by image processing based on entire disassembly target object image data 5 generated by image acquisition unit 2. Coarse recognition identification unit 11 classifies entire disassembly target object image data 5 into fastening component 4a and non-fastening component 4b using coarse recognition deep learning model 12, and specifies a position of fastening component 4a as heat map 6. Heat map 6 is image data that is created by determining whether or not each pixel is a fastening component based on entire disassembly target object image data 5, and indicating a determination result for the fastening component by a color density of 0 to 255 for each pixel. Although described in detail later, coarse recognition deep learning model 12 is a deep learning model that is trained to recognize a fastening component (62 in Fig. 7) in learning data 56 generated by imaging a target object for learning data generation (51 in Fig. 5) as fastening component data based on an image clipped by first fixed rectangle 66 centered on tool hole 62a of the fastening component, and to recognize a non-fastening component in the learning data as non-fastening component data based on an image clipped by a second fixed rectangle the same as the first fixed rectangle centered on an arbitrary point.

In addition, image clipping unit 20 includes presence region extraction unit 21, fastening component specification unit 22, and clipping processor 23. Image clipping unit 20 converts heat map 6 into a binary image based on a preset threshold value, detects a contour from the binary image, calculates a barycentric position for each contour of heat map 6, and calculates each position of entire disassembly target object image data 5 corresponding to each barycentric position of heat map 6.

Further, fine recognition unit 30 includes fine recognition identification unit 31. Fine recognition unit 30 receives disassembly target object clipped image data 7 as an input, and fine recognition identification unit 31 classifies whether or not a fastening component is included by image processing.

Controller 3 integrally controls image acquisition unit 2, coarse recognition unit 10, image clipping unit 20, and fine recognition unit 30.

In such a configuration, the recognition method for the fastening component includes:
executing coarse recognition of outputting, as heat map 6, a position and a region of a fastening component of disassembly target object for recognition 4 from image data for automatic disassembly 5 obtained by imaging the disassembly target object for recognition different from the target object for learning data generation, based on coarse recognition deep learning model 12,
calculating a barycentric position for each region from the heat map of the fastening component of the disassembly target object for recognition,
clipping the fastening component of the disassembly target object for recognition from the image data for automatic disassembly around the barycentric position as fastening component image for fine recognition 7 by a third fixed rectangle, and
executing fine recognition of determining whether or not the fastening component image for fine recognition is the fastening component of the disassembly target object for recognition. Hereinafter, this will be described in detail.

### <Basic fastening component recognition method>

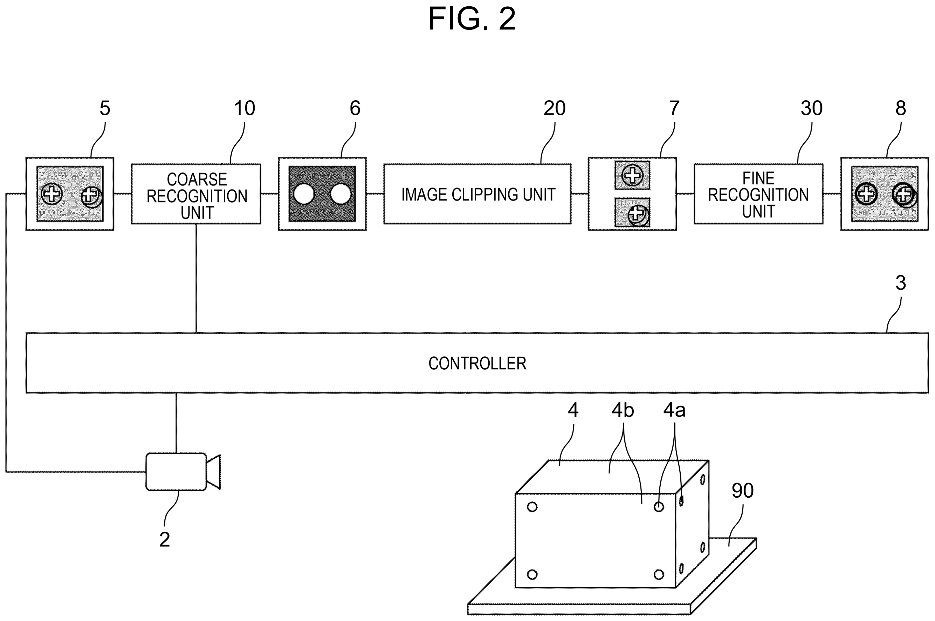

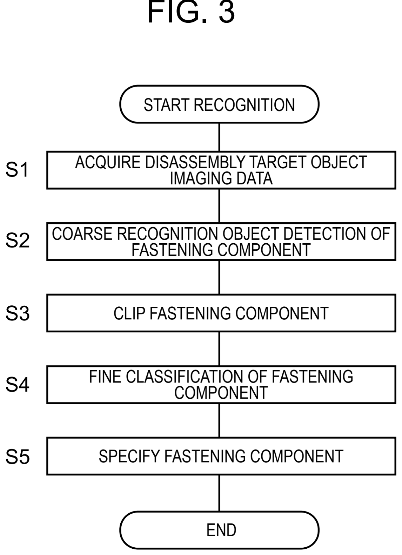

A basic fastening component recognition method of fastening component recognition device 1 according to the first exemplary embodiment will be described with reference to the schematic diagram of Fig. 2 and the flowchart of Fig. 3. Here, the steps of the recognition method will be described with reference to Fig. 3, and the other symbols will be described with reference to Fig. 2.

First, in step S1, image acquisition unit 2 images disassembly target object 4 based on a command from controller 3, and generates and acquires entire disassembly target object image data 5 as disassembly target object imaging data.

Next, in step S2, as coarse recognition object detection of a fastening component, coarse recognition unit 10 specifies a position of the fastening component by image processing based on entire disassembly target object image data 5. Here, in specifying the fastening component, coarse recognition deep learning model 12 prepared by learning a portion of a fastening component (for example, a screw) in advance as fastening component data and learning a portion of a non-fastening component (for example, a background of a home appliance as an example of a disassembly target object, and a cover of the home appliance) as one or more pieces of non-fastening component data is used by coarse recognition identification unit 11, to classify entire disassembly target object image data 5 into the fastening component and the non-fastening component, specify the position of the fastening component as heat map 6 by coarse recognition identification unit 11, and to detect a coarse recognition object of the fastening component. Coarse recognition deep learning model 12 prepared by learning in advance will be separately described.

Next, in step S3, presence region extraction unit 21 of image clipping unit 20 calculates a barycentric position for each contour of heat map 6, and fastening component specification unit 22 calculates each position of entire disassembly target object image data 5 corresponding to each barycentric position of heat map 6. Clipping processor 23 generates disassembly target object clipped image data 7 obtained by clipping out fastening components individually from entire disassembly target object image data 5 using a third fixed rectangle centered on each calculated position, and clips the fastening components. Here, each barycentric position calculated by image clipping unit 20 coincides with the center of the tool hole of the fastening component from the characteristics of coarse recognition deep learning model 12. Therefore, disassembly target object clipped image data 7 is image data including a tool hole in the center of the image.

Next, in step S4, with disassembly target object clipped image data 7 as an input, fine recognition identification unit 31 of fine recognition unit 30 performs classification based on whether or not a fastening component is present by image processing, and performs fine classification of the fastening component. Here, the classification method of fine recognition unit 30 may be any method such as classification by deep learning or circle detection.

Finally, in step S5, based on the image determined to be the fastening component by fine recognition unit 30 and the barycentric position calculated by image clipping unit 20, the coordinates of the fastening component included in entire disassembly target object image data 5 are output from fine recognition unit 30 as disassembly target object recognition result 8. Thus, the fastening component is specified.

Although the above is the basic recognition method of the fastening component recognition method, in the first exemplary embodiment, the recognition accuracy of the fastening component is improved by using the method for creating coarse recognition deep learning model 12 created in advance and image clipping unit 20 using the characteristics of coarse recognition deep learning model 12. These will be described in detail below for each of coarse recognition unit 10, image clipping unit 20, and fine recognition unit 30.

### <Coarse recognition deep learning model 12>

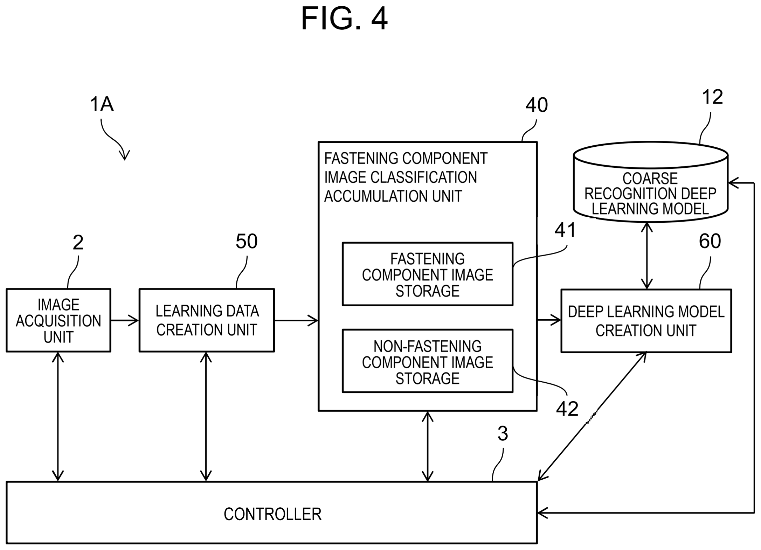

Fig. 4 is a block diagram illustrating a configuration of creation device 1A of coarse recognition deep learning model 12 created before the coarse recognition processing in the first exemplary embodiment, and Fig. 5 is a schematic diagram of creation. In Figs. 4 and 5, the same components as those in Fig. 1 are denoted by the same reference numerals, and the description thereof will be omitted.

In Fig. 4, coarse recognition deep learning model creation device 1A of fastening component recognition device 1 includes learning data creation unit 50 that clips image data of a fastening component and a non-fastening component from a product that is an example of a large number of disassembly target objects necessary for creating coarse recognition deep learning model 12, fastening component image classification accumulation unit 40 that accumulates the clipped learning data, and deep learning model creation unit 60 that uses data of fastening component image classification accumulation unit 40, and stores coarse recognition deep learning model 12 that has been created in coarse recognition unit 10.

Learning data creation unit 50 generates target object image data for learning data generation 52 by imaging target object for learning data generation 51 with image acquisition unit 2 based on a command from controller 3. Further, as will be described later, learning data creation unit 50 generates, as clipped image data for learning data generation 56, an image clipped by the first fixed rectangle around the tool hole of the fastening component and an image obtained by clipping the non-fastening component by the second fixed rectangle from target object image data for learning data generation 52 that has been generated.

Fastening component image classification accumulation unit 40 classifies and stores clipped image data for learning data generation 56 that has been generated into fastening component data and one or more pieces of non-fastening component data. For storing, fastening component image classification accumulation unit 40 includes fastening component image storage 41 that stores fastening components imaged among a large number of disassembly target products as fastening component data, and non-fastening component image storage 42 that stores non-fastening components as one or more pieces of non-fastening component data.

Deep learning model creation unit 60 reads the image data stored in fastening component image storage 41 and non-fastening component image storage 42 for each data, and creates a coarse recognition deep learning model capable of outputting object detection as a heat map.

### <Method for creating coarse recognition deep learning model 12 created in advance>

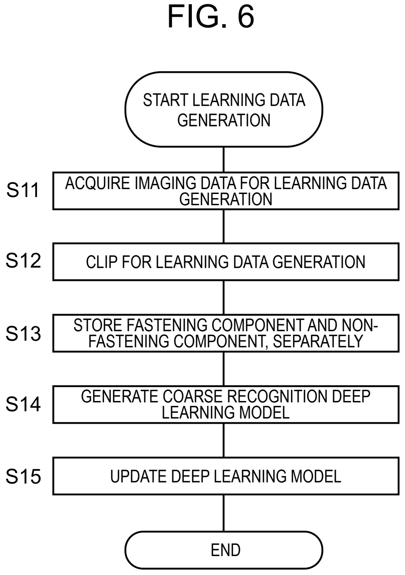

A method for creating coarse recognition deep learning model 12 created in advance of the fastening component recognition method according to the first exemplary embodiment will be described with reference to a schematic diagram of Fig. 5 and a flowchart of Fig. 6. Here, the steps of the recognition method will be described with reference to Fig. 6, and the other symbols will be described with reference to Fig. 5.

First, in step S11, by the learning data creation unit 50, image acquisition unit 2 images target object for learning data generation 51 based on a command from controller 3, and generates and acquires target object image data for learning data generation 52 as the imaging data for learning data generation. Target object image data for learning data generation 52 includes image including entire outer shape of fastening component 53, image including only part of outer shape of fastening component 54 due to rust, corrosion, a counterbore hole, or the like, and image other than fastening component 55.

Next, in step S12, learning data creation unit 50 generates, as clipped image data for learning data generation 56, an image clipped by the first fixed rectangle around the tool hole of the fastening component and an image obtained by clipping the non-fastening component by the second fixed rectangle from target object image data for learning data generation 52. The fastening component of clipped image data for learning data generation 56 is an image clipped by the first fixed rectangle centered on the tool hole regardless of the visible portion of the outer shape, and is to be clipped image including entire outer shape of fastening component 57 and clipped image including only part of outer shape of fastening component 58. Regardless of the center position of the image clipping, the clipped image other than the fastening component is to be clipped image other than fastening component 59 clipped by the second fixed rectangle.

Next, in step S13, fastening component image classification accumulation unit 40 classifies clipped image data for learning data generation 56 into fastening component data and one or more pieces of non-fastening component data. Fastening component image storage 41 stores the fastening component, and non-fastening component image storage 42 stores the non-fastening component.

Next, in step S14, deep learning model creation unit 60 reads the image data stored in fastening component image storage 41 and the image data stored in non-fastening component image storage 42 for each fastening component data and for each non-fastening component data, and creates coarse recognition deep learning model 12 capable of outputting object detection as a heat map.

Finally, in step S15, coarse recognition deep learning model 12 created by deep learning model creation unit 60 is stored or stored and updated in coarse recognition unit 10 as the coarse recognition learning model stored in coarse recognition unit 10, and is to be available for recognition of the fastening component by the fastening component recognition method in coarse recognition unit 10.

### <Method for clipping image data for coarse recognition deep learning model generation>

Here, a method for clipping image data for coarse recognition deep learning model generation of learning data creation unit 50 will be described with reference to a schematic diagram of Fig. 7. When creating coarse recognition deep learning model 12, fastening component for learning data generation 62 is clipped by learning data creation unit 50 based on target object image data for learning data generation 52 (that is, target object image data for learning data generation 61 of Fig. 7). Here, with center 63 of tool hole 62a of fastening component 62 as a reference point, learning data creation unit 50 obtains point on fastening component outer shape 64 that is the longest from reference point 63, and learning data creation unit 50 calculates straight line 65 between reference point 63 and point on fastening component outer shape 64. For example, learning data creation unit 50 calculates clipping rectangle for deep learning model 66 having a square shape with twice straight line between two points 65 as a length of each side as the first fixed rectangle, and learning data creation unit 50 clips a fastening component by square clipping rectangle for deep learning model 66 of the first fixed rectangle centered on reference point 63 as clipped image 67. Since there is no reference point for the non-fastening component, learning data creation unit 50 clips the non-fastening component using clipping rectangle for deep learning model 66 of the second fixed rectangle having an identical size and shape to the size and shape of the first fixed rectangle around an arbitrary point.

Here, the first fixed rectangle is a rectangle having a size centered on tool hole 62a of fastening component 62 of learning data 56 and enclosing at least tool hole 62a. The first fixed rectangle and the second fixed rectangle have the same size and the same shape. An expression of "identical" also includes "substantially identical".

Note that, in a case where fastening components, for example, screws do not have an identical size, and screws having different sizes are mixed, a fixed rectangle is determined based on screws having the maximum diameter.

### <Method for detecting fastening component object of coarse recognition unit 10>

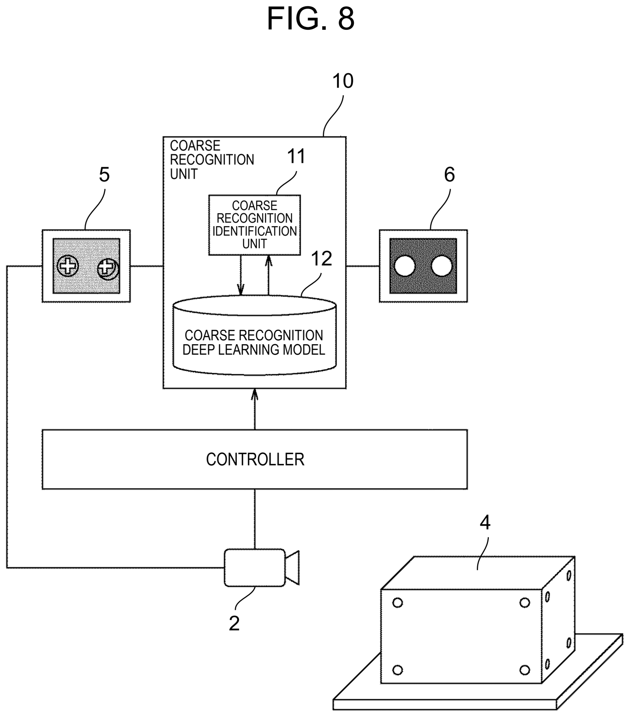

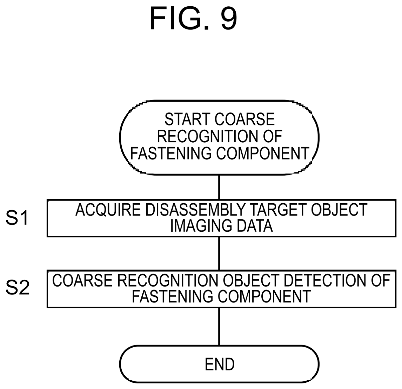

A method for detecting fastening component object of coarse recognition unit 10 in the fastening component recognition method according to the first exemplary embodiment will be described with reference to a schematic diagram of Fig. 8 and a flowchart of Fig. 9. Here, the steps of the recognition method of coarse recognition unit 10 will be described with reference to Fig. 9, and the other symbols will be described with reference to Fig. 8.

First, in step S1, based on a command from controller 3, image acquisition unit 2 images disassembly target object 4, and generates and acquires entire disassembly target object image data 5.

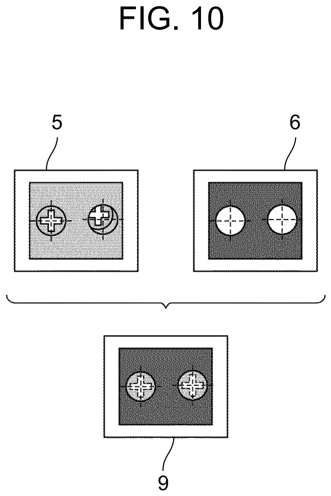

Next, in step S2, coarse recognition unit 10 receives entire disassembly target object image data 5 as an input, performs image processing using coarse recognition deep learning model 12, sets the position of the fastening component as heat map 6, and outputs the result of the object detection to image clipping unit 20. Heat map 6 output by coarse recognition unit 10 includes the results of all the fastening components included in entire disassembly target object image data 5 as an input. Here, heat map 6 that has been output is generated using coarse recognition deep learning model 12 created from the learning data clipped with the first fixed rectangle centered on the tool hole center of the fastening component. Therefore, image 9 including tool hole of fastening component superimposed on heat map 6 is an image showing that the position of the center of the tool hole coincides with the position of the barycentric position of the circular contour of heat map 6, as illustrated in a schematic view including entire disassembly target object image data 5 being superimposed on heat map 6 of Fig. 10.

### <Method for fastening component image clipping of image clipping unit 20>

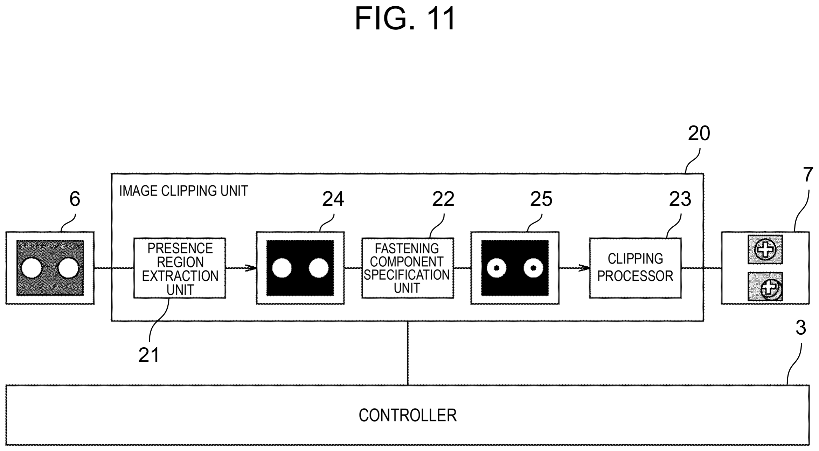

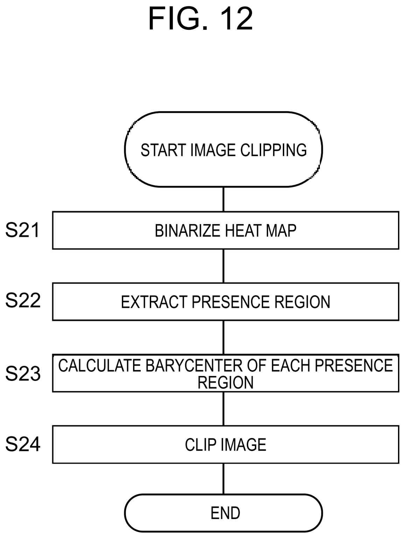

A method for fastening component image clipping of image clipping unit 20 in the fastening component recognition method in the first exemplary embodiment will be described with reference to a schematic diagram of Fig. 11 and a flowchart of Fig. 12. Here, the steps of the recognition method of image clipping unit 20 will be described with reference to Fig. 12, and the other symbols will be described with reference to Fig. 11.

First, in step S21, presence region extraction unit 21 converts heat map 6 output by coarse recognition unit 10 into a binary image based on a preset threshold value. The threshold value set here may be used for detecting a non-fastening component as a fastening component, and may be included in the binary image.

Next, in step S22, presence region extraction unit 21 detects a contour from the binary image, and extracts binary image 24 including an extracted region surrounded by the contour, that is, a presence region.

Next, in step S23, fastening component specification unit 22 receives binary image 24 including the presence region extracted by presence region extraction unit 21 as an input, calculates the barycentric position for each presence region and outputs barycentric position image 25.

Next, in step S24, clipping processor 23 receives barycentric position image 25 extracted by fastening component specification unit 22 as an input, calculates pixels of entire disassembly target object image data 5 corresponding to each barycentric position, and clips the image with a third fixed rectangle centered on the pixels to output disassembly target object clipped image data 7. At this time, in clipping processor 23, the pixel calculation result of entire disassembly target object image data 5 corresponding to each barycentric position is separately recorded in controller 3 (to be used in step S32 described later).

### <Method for fastening component image clipping of image clipping unit 20>

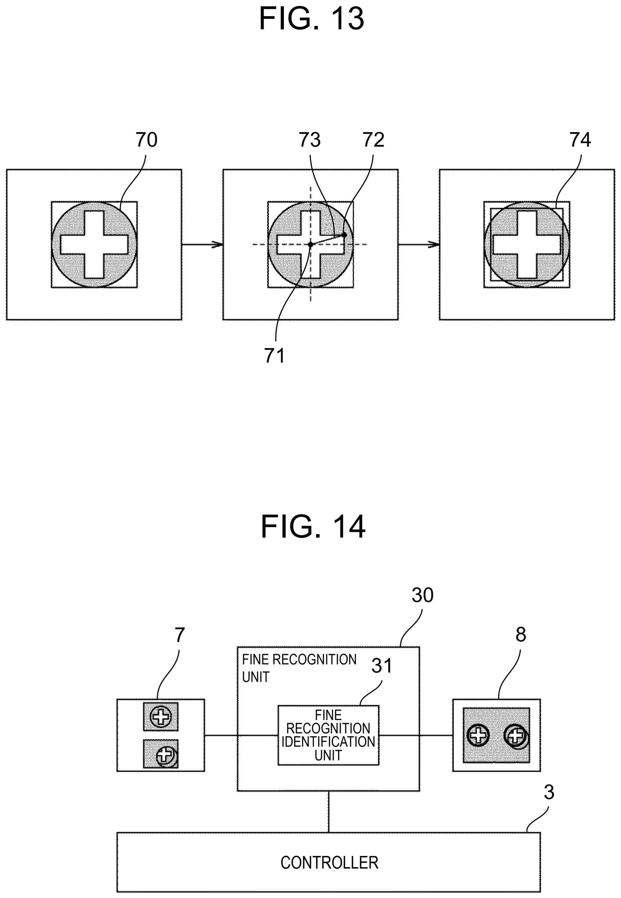

Here, a method for fastening component image clipping of image clipping unit 20 will be described with reference to a schematic diagram of Fig. 13. When the size of a fixed clipping rectangle of clipping processor 23 (that is, the third fixed rectangle for the fastening component and the fourth fixed rectangle for the non-fastening component) is determined, the maximum rectangle and the minimum rectangle are calculated in advance by clipping processor 23. Since the maximum rectangle is clipping rectangle for deep learning model 66, a detailed description thereof will be omitted. The minimum rectangle is obtained from fastening component clipped image 70 obtained by clipping the fastening component by clipping rectangle for deep learning model 66.

First, based on fastening component clipped image 70, center of tool hole of fastening component 71 is set as a reference point, point on fastening component tool hole outer shape 72 that is the longest from reference point 71 is obtained, and straight line 73 between reference point 71 and point on fastening component tool hole outer shape 72 is calculated.

Then, minimum rectangle 74 is calculated with twice the length of straight line between two points 73 as the length of each side. The size of the third fixed rectangle, that is, the fourth fixed rectangle is determined in a range from the maximum rectangle to the minimum rectangle.

That is, the third fixed rectangle is determined between the maximum rectangle and the minimum rectangle, and is a rectangle having a size centered on the tool hole of the fastening component and including at least the tool hole. In other words, with the third fixed rectangle, the fastening component is clipped as a fastening component image for fine recognition from image data for automatic disassembly around the barycentric position calculated for each region from the heat map of the fastening component. With the fourth fixed rectangle, the non-fastening component of the disassembly target object for recognition is clipped as the non-fastening component image for fine recognition from the image data for automatic disassembly around an arbitrary point. The third fixed rectangle and the fourth fixed rectangle have an identical size and an identical shape. An expression of "identical" also includes "substantially identical".

### <Fine detection of fastening component of fine recognition unit 30>

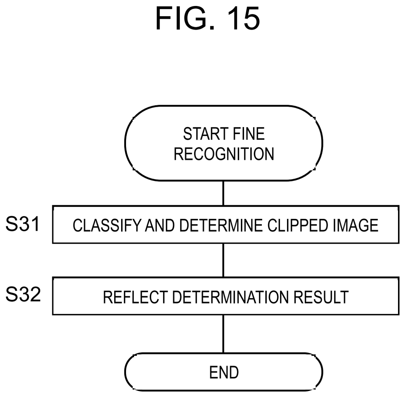

In the fastening component recognition method of the first exemplary embodiment, the fastening component fine detection of fine recognition unit 30 will be described using a schematic diagram of Fig. 14 and a flowchart of Fig. 15. Here, the steps of the recognition method of fine recognition unit will be described with reference to Fig. 15, and the other symbols will be described with reference to Fig. 14.

First, in step S31, fine recognition identification unit 31 of fine recognition unit 30 classifies and determines disassembly target object clipped image data 7 into the fastening component and the non-fastening component by image processing. Here, the classification and determination method of fine recognition unit 30 may be any method such as classification by deep learning or circle detection.

Next, in step S32, fine recognition identification unit 31 of fine recognition unit 30 reflects the determination result and the pixel calculation result corresponding to each barycentric position in entire disassembly target object image data 5, and outputs the result as the disassembly target object recognition result. Here, even in a case where the non-fastening component is erroneously determined as the fastening component in heat map 6 that is the fastening component object detection result of coarse recognition unit 10, it is possible to improve the recognition accuracy by classifying and determining the fastening component and the non-fastening component again by fine recognition identification unit 31 of fine recognition unit 30 through the image processing. In addition, since disassembly target object clipped image data 7 input to fine recognition unit 30 is a fixed rectangular image based on the third fixed rectangle centered on the tool hole of the fastening component, variations in the input image are small, and highly accurate image processing can be realized.

As described above, according to the fastening component recognition method according to the first exemplary embodiment, even in a used home appliance in a case where a state such as rust, deformation, or damage of a disassembly target object, for example, a fastening component is different, or a characteristic such as a fastening place or a shape of the fastening component is different depending on a manufacturer, a model number, or the like, it is possible to output a result indicating that the center of the disassembly target object clipped image coincides with the center of the tool hole of the fastening component, and the size of the disassembly target object clipped image is also fixed. As a result, in a case where a plurality of recognition methods are combined, variations in the input image in the subsequent process can be suppressed, and it is possible to recognize the fastening component with high accuracy without depending on human hands.

That is, since the circumscribed rectangle of the visible portion is clipped as the learning data in the related art, the central position of the fastening component tool hole of disassembly target object clipped image 121 varies depending on the visible portion of the fastening component. On the other hand, in the first exemplary embodiment, coarse recognition deep learning model 12 is trained by learning fastening component 62 of learning data 56 as the fastening component data based on the image clipped by first fixed rectangle 66 centered on tool hole 62a of the fastening component, and learning the non-fastening component of the learning data as the non-fastening component data based on the image clipped by the second fixed rectangle identical to the first fixed rectangle centered on an arbitrary point. As a result, the barycentric position calculated for each of the regions from the heat map of the fastening component by the coarse recognition using coarse recognition deep learning model 12 coincides with the center of the tool hole of the fastening component. Therefore, disassembly target object clipped image data 7 is image data including the tool hole at the center of the image, and the central position of the tool hole of the fastening component does not vary.

In addition, conventionally, since image clipping unit 220 clips the image from the contour of the heat map, the size of the clipped image of disassembly target object clipped image 121 varies. On the other hand, in the above aspect of the present disclosure, in the coarse recognition, the barycentric position is calculated for each region from the heat map of the fastening component, and the fastening component is clipped as fastening component image for fine recognition 7 by the third fixed rectangle from the image data for automatic disassembly with the barycentric position as the center. Therefore, disassembly target object clipped image data 7 is a fixed rectangular image centered on the tool hole of the fastening component, the variation of the input image is small, and highly accurate image processing can be realized.

### (Second exemplary embodiment)

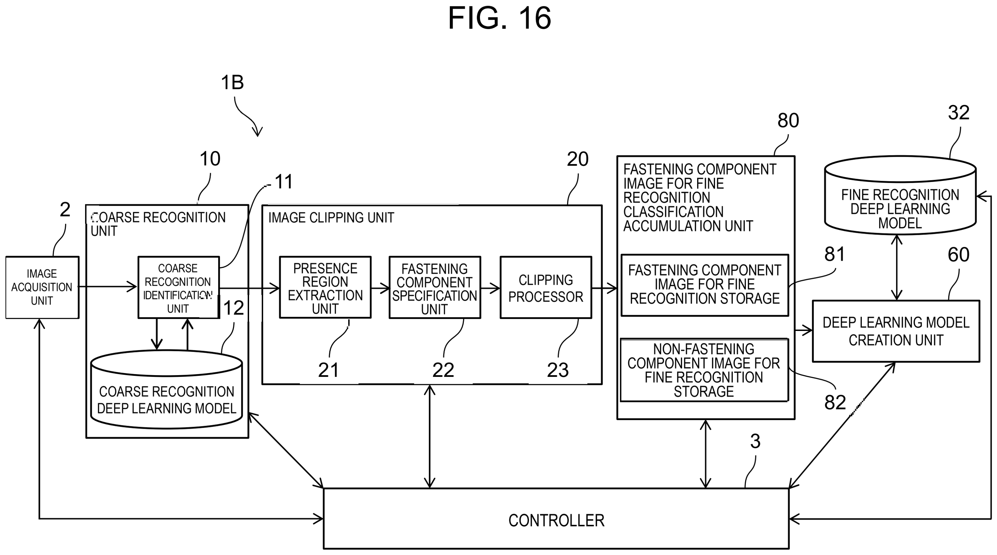

Fig. 16 is a configuration block diagram of fastening component recognition device 1B capable of performing a fastening component recognition method according to a second exemplary embodiment of the present disclosure. Fig. 1 illustrating the first exemplary embodiment is different in the presence or absence of fine recognition deep learning model 32 in fine recognition unit 30, and Fig. 1 is the same in others. Thus, a detailed description thereof will be omitted. In the first exemplary embodiment, image clipping unit 20 generates a disassembly target object clipped image, and the fine recognition unit improves the accuracy by classifying the disassembly target object clipped image by image processing. In order to perform more accurate classification with respect to the first exemplary embodiment, in the second exemplary embodiment, a fine recognition deep learning model using the disassembly target object clipped image data is generated in advance, and more accurate recognition of the fastening component is realized.

### <Configuration of fine recognition deep learning model 32 created in advance>

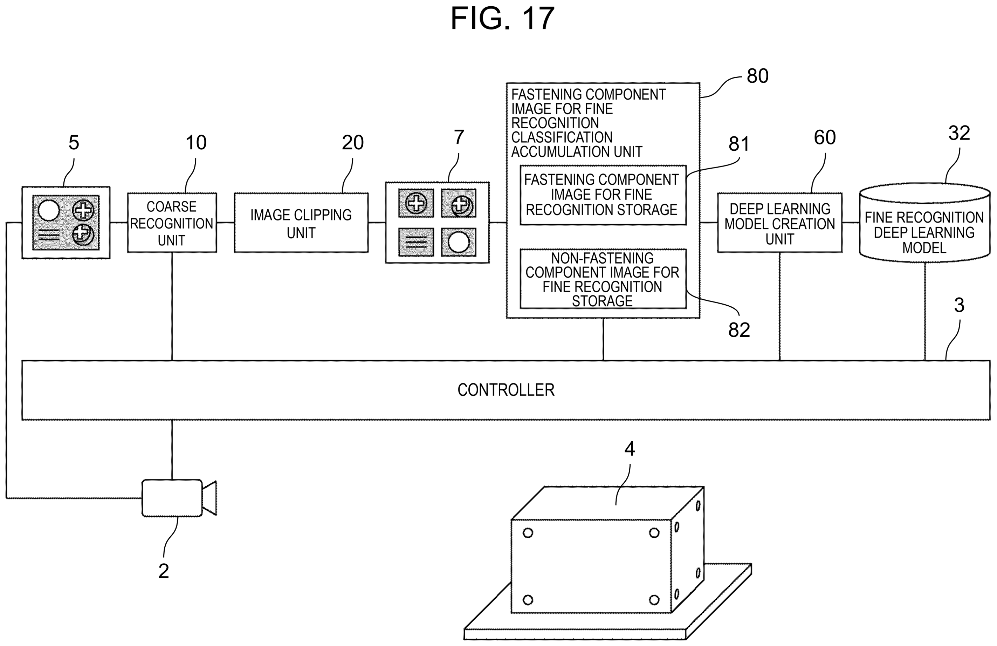

Fig. 17 is a schematic diagram illustrating a configuration of fine recognition deep learning model 32 created in advance according to the second exemplary embodiment. In Fig. 17, the same components as those in Figs. 1 and 16 are denoted by the same reference numerals, and description thereof is omitted.

In Fig. 17, fastening component recognition device 1B includes fastening component image for fine recognition classification accumulation unit 80 that clips image data of a fastening component and a non-fastening component necessary for creating fine recognition deep learning model 32 by coarse recognition unit 10 and image clipping unit 20, that are the same components as those of the first exemplary embodiment, and accumulates the clipped learning data, and deep learning model creation unit 60 that uses data of fastening component image for fine recognition classification accumulation unit 80, and stores fine recognition deep learning model 32 that has been created in fine recognition unit 30.

Fastening component image for fine recognition classification accumulation unit 80 includes fastening component image for fine recognition storage 81 that classifies and stores fastening components as a group in the image data clipped by image clipping unit 20, and non-fastening component image for fine recognition storage 82 that classifies and stores non-fastening components as a group.

### <Method for creating fine recognition deep learning model 32>

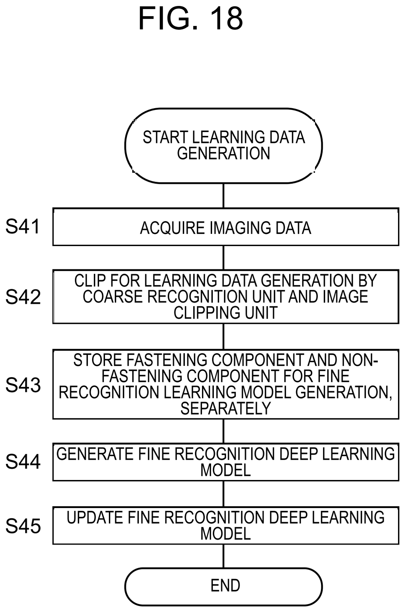

A method for creating fine recognition deep learning model 32 created in advance in the fastening component recognition method according to the second exemplary embodiment will be described with reference to a schematic diagram of Fig. 17 and a flowchart of Fig. 18. Here, the steps of the recognition method will be described with reference to Fig. 18, and the other symbols will be described with reference to Fig. 17.

First, in step S41, image acquisition unit 2 images disassembly target object 4 based on a command from controller 3, and generates entire disassembly target object image data 5 as imaging data.

Next, in step S42, coarse recognition unit 10 receives entire disassembly target object image data 5 as an input, and performs image processing using coarse recognition deep learning model 12, and image clipping unit 20 generates disassembly target object clipped image data 7 to perform clipping for learning data generation.

Next, in step S43, fastening component image for fine recognition classification accumulation unit 80 classifies disassembly target object clipped image data 7 into the fastening component and the non-fastening component, fastening component image for fine recognition storage 81 stores the fastening component, and non-fastening component image for fine recognition storage 82 stores the non-fastening component.

Next, in step S44, deep learning model creation unit 60 reads the image data stored in fastening component image storage 41 and non-fastening component image storage 42 as respective groups, and generates fine recognition deep learning model 32 for classifying and determining whether or not the image data is a fastening component.

Finally, in step S45, fine recognition deep learning model 32 that has been created is stored or stored and updated in fine recognition unit 30 as the fine recognition learning model, and is to be available for recognition of the fastening component in fastening component recognition device 1B.

Here, since the fastening component image stored in fastening component image for fine recognition storage 81 is a rectangular image centered on the tool hole of the fastening component, the variation of the input image is small, and the recognition correct answer rate is high.

As described above, according to the fastening component recognition method according to the second exemplary embodiment, even in a used home appliance in a case where a state such as rust, deformation, or damage of a fastening component is different, or a characteristic such as a fastening place or a shape of the fastening component is different depending on a manufacturer, a model number, or the like, it is possible to output a result indicating that the center of the disassembly target object clipped image coincides with the center of the tool hole of the fastening component, and the size of the disassembly target object clipped image is also fixed. As a result, in a case where a plurality of recognition methods are combined, variations in the input image in the subsequent process can be suppressed, and it is possible to recognize the fastening component with higher accuracy than the first exemplary embodiment without depending on human hands.

Note that by appropriately combining arbitrary exemplary embodiments or modifications among the various exemplary embodiments or modifications described above, the effects of the respective embodiments or modifications can be achieved. In addition, combinations of exemplary embodiments, combinations of examples, or combinations of exemplary embodiments and examples are possible, and combinations of features in different exemplary embodiments or examples are also possible.

### (Supplementary note)

The above description of the exemplary embodiments discloses the following techniques.

(Technique 1) A recognition method including:
executing coarse recognition of outputting, as a heat map, a position and a region of a fastening component of a disassembly target object for recognition from image data for automatic disassembly based on a coarse recognition deep learning model,
   the image data for automatic disassembly being obtained by imaging the disassembly target object for recognition,
   the coarse recognition deep learning model being trained by learning a fastening component of learning data based on fastening component data, and learning a non-fastening component of the learning data based on non-fastening component data,
   the learning data being generated by imaging a target object for learning data generation different from the disassembly target object for recognition,
   the fastening component data being based on an image clipped by a first fixed rectangle centered on a tool hole of the fastening component from the learning data,
   the non-fastening component data being based on an image clipped by a second fixed rectangle centered on an arbitrary point from the learning data,
   the second fixed rectangle being identical to the first fixed rectangle;
calculating a barycentric position for each region from the heat map of the fastening component of the disassembly target object for recognition;
clipping, by a third fixed rectangle centered on the barycentric position, the fastening component of the disassembly target object for recognition from the image data for automatic disassembly as a fastening component image for fine recognition; and
executing fine recognition of determining whether or not the fastening component image for fine recognition is the fastening component of the disassembly target object for recognition.

(Technique 2) The recognition method according to technique 1, wherein
the first fixed rectangle is a rectangle centered on the tool hole of the fastening component in the learning data and having a size enclosing at least the tool hole, and
the first fixed rectangle, the second fixed rectangle, and the third fixed rectangle are rectangles having an identical size and shape.

(Technique 3) The recognition method according to technique 1 or 2, further including creating the coarse recognition deep learning model including:
based on the learning data, setting a center of the tool hole of the fastening component as a reference point, obtaining a point on a fastening component outer shape that is longest from the reference point, obtaining a length of a straight line connecting the reference point and the point on the fastening component outer shape, calculating a clipping rectangle for deep learning model as the first fixed rectangle with a length twice a length of the straight line as a length of each side, and generating a fastening component image and a non-fastening component image,
the fastening component image is clipped by the clipping rectangle for deep learning model of the first fixed rectangle around the reference point,
the non-fastening component image is clipped by the clipping rectangle for deep learning model of the second fixed rectangle having a size and a shape identical to the first fixed rectangle around an arbitrary point.

(Technique 4) The recognition method according to any one of techniques 1 to 3, wherein the clipping the fastening component of the disassembly target object for recognition from the image data for automatic disassembly as the fastening component image for fine recognition includes:
based on the learning data, setting a center of the tool hole of the fastening component as a reference point, obtaining a point on a fastening component outer shape that is longest from the reference point, obtaining a length of a straight line connecting the reference point and the point on the fastening component outer shape, calculating a clipping rectangle for deep learning model with a length twice a length of the straight line as a length of each side,
based on the learning data, setting a center of the tool hole of the fastening component as a reference point, obtaining a point on a tool hole outer shape of the fastening component that is longest from the reference point, obtaining a length of a straight line connecting the reference point and the point on the tool hole outer shape, calculating a clipping rectangle size with a length twice a length of the straight line as a length of each side, and
determining the third fixed rectangle within a range defined by the clipping rectangle for deep learning model as a maximum and the clipping rectangle size as a minimum, and performing clipping.

(Technique 5) The recognition method according to any one of techniques 1 to 4, wherein the executing the fine recognition includes:
determining whether or not the fastening component image for fine recognition is the fastening component by using a fine recognition deep learning model created for fastening component detection,
the fine recognition deep learning model is trained in advance by learning an image of the fastening component in the fastening component image for fine recognition as fastening component data, and an image other than the fastening component as non-fastening component data, and classifying an input image as a heat map into the fastening component or the non-fastening component for each pixel.

(Technique 6) The recognition method according to any one of techniques 1 to 5, wherein
the fastening component includes a plurality of fastening members having different diameters, and
at least one of the first fixed rectangle, the second fixed rectangle, and the third fixed rectangle is determined based on a fastening component having a maximum diameter among the plurality of fastening members.

With each of these configurations, even in a case where the state of the fastening component is different such as rust, deformation, or damage, it is possible to perform highly accurate recognition.

As described above, according to the fastening component recognition method according to the aspect of the present disclosure, even in a used home appliance in a case where a state such as rust, deformation, or damage of a disassembly target object, for example, a fastening component is different, or a characteristic such as a fastening place or a shape of the fastening component is different depending on a manufacturer, a model number, or the like, it is possible to output a result indicating that the center of the disassembly target object clipped image coincides with the center of the tool hole of the fastening component, and the size is also fixed. As a result, in a case where a plurality of recognition methods are combined, variations in the input image in the subsequent process can be suppressed, and it is possible to recognize the fastening component with high accuracy without depending on human hands, and to reduce labor in the disassembly work of the disassembly target object.

That is, since the circumscribed rectangle of the visible portion is clipped as the learning data in the related art, the central position of the fastening component tool hole of the disassembly target object clipped image varies depending on the visible portion of the fastening component. On the other hand, in the aspect of the present disclosure, a coarse recognition deep learning model is trained by learning fastening component of learning data as the fastening component data based on the image clipped by first fixed rectangle centered on tool hole of the fastening component, and learning the non-fastening component of the learning data as the non-fastening component data based on the image clipped by the second fixed rectangle identical to the first fixed rectangle centered on an arbitrary point. As a result, the barycentric position calculated for each of the regions from the heat map of the fastening component by the coarse recognition using the coarse recognition deep learning model coincides with the center of the tool hole of the fastening component. Therefore, disassembly target object clipped image data is image data including the tool hole at the center of the image, and the central position of the tool hole of the fastening component does not vary.

In addition, conventionally, since the image clipping unit clips the image from the contour of the heat map, the size of the clipped image of disassembly target object clipped image varies. On the other hand, in the above aspect of the present disclosure, in the coarse recognition, the barycentric position is calculated for each region from the heat map of the fastening component, and the fastening component is clipped as fastening component image for fine recognition by the third fixed rectangle from the image data for automatic disassembly with the barycentric position as the center. Therefore, the disassembly target object clipped image data is a fixed rectangular image centered on the tool hole of the fastening component, the variation of the input image is small, and highly accurate image processing can be realized.

### INDUSTRIAL APPLICABILITY

By using the fastening component recognition method according to the above aspect of the present disclosure, it is possible to perform highly accurate recognition even in a case where the state of the fastening component is different such as rust, deformation, or breakage in various production manufacturers and recycling factories that process used products having various shapes. As a result, processing of used products by automatic disassembly becomes minute, and labor saving or further resource utilization of used home appliances can be promoted.

### REFERENCE MARKS IN THE DRAWINGS

1, 1B: fastening component recognition device
1A: coarse recognition deep learning model creation device
2: image acquisition unit
3: controller
4: disassembly target object
4a: fastening component
4b: non-fastening component
5: entire disassembly target object image data
6: heat map
7: disassembly target object clipped image data
8: disassembly target object recognition result
9: image including tool hole of fastening component superimposed on heat map
10: coarse recognition unit
11: coarse recognition identification unit
12: coarse recognition deep learning model
20: image clipping unit
21: presence region extraction unit
22: fastening component specification unit
23: clipping processor
24: binary image including extracted presence region
25: barycentric position image
30: fine recognition unit
31: fine recognition identification unit
32: fine recognition deep learning model
40: fastening component image classification accumulation unit
41: fastening component image storage
42: non-fastening component image storage
50: learning data creation unit
51: target object for learning data generation
52: target object image data for learning data generation
53: image including entire outer shape of fastening component
54: image including only part of outer shape of fastening component
55: image other than fastening component
56: clipped image data for learning data generation
57: clipped image including entire outer shape of fastening component
58: clipped image including only part of outer shape of fastening component
59: clipped image other than fastening component
60: deep learning model creation unit
61: target object image data for learning data generation
62: fastening component for learning data generation
62a: tool hole
63: center of tool hole of fastening component
64: point on fastening component outer shape
65: straight line between two points
66: clipping rectangle for deep learning model
67: clipped image
70: fastening component clipped image
71: center of tool hole of fastening component
72: point on fastening component tool hole outer shape
73: straight line between two points
74: minimum rectangle
80: fastening component image for fine recognition classification accumulation unit
81: fastening component image for fine recognition storage
82: non-fastening component image for fine recognition storage
90: placement table
101: display panel
102: conveyance unit
103: first fixing member detector
104: second fixing member detector
105: fixing member disassembly unit
111: target object image for learning data generation
112: image including entire outer shape of fastening component
113: image including only part of outer shape of fastening component
114: learning data creation unit
115: image for learning data generation
116: entire disassembly target object image data
117: image including entire outer shapes
118: image including only part of outer shape
119: coarse recognition deep learning model
120: heat map
121: disassembly target object clipped image

## Claims

1. A recognition method comprising:
executing coarse recognition of outputting, as a heat map, a position and a region of a fastening component of a disassembly target object for recognition from image data for automatic disassembly based on a coarse recognition deep learning model,
the image data for automatic disassembly being obtained by imaging the disassembly target object for recognition,
the coarse recognition deep learning model being trained by learning a fastening component of learning data based on fastening component data, and learning a non-fastening component of the learning data based on non-fastening component data,
the learning data being generated by imaging a target object for learning data generation different from the disassembly target object for recognition,
the fastening component data being based on an image clipped by a first fixed rectangle centered on a tool hole of the fastening component from the learning data,
the non-fastening component data being based on an image clipped by a second fixed rectangle centered on an arbitrary point from the learning data,
the second fixed rectangle being identical to the first fixed rectangle;
calculating a barycentric position for each region from the heat map of the fastening component of the disassembly target object for recognition;
clipping, by a third fixed rectangle centered on the barycentric position, the fastening component of the disassembly target object for recognition from the image data for automatic disassembly as a fastening component image for fine recognition; and
executing fine recognition of determining whether or not the fastening component image for fine recognition is the fastening component of the disassembly target object for recognition.

2. The recognition method according to Claim 1, wherein
the first fixed rectangle is a rectangle centered on the tool hole of the fastening component in the learning data and having a size enclosing at least the tool hole, and
the first fixed rectangle, the second fixed rectangle, and the third fixed rectangle are rectangles having an identical size and shape.

3. The recognition method according to Claim 2, further comprising creating the coarse recognition deep learning model including:
based on the learning data, setting a center of the tool hole of the fastening component as a reference point, obtaining a point on a fastening component outer shape that is longest from the reference point, obtaining a length of a straight line connecting the reference point and the point on the fastening component outer shape, calculating a clipping rectangle for deep learning model as the first fixed rectangle with a length twice a length of the straight line as a length of each side, and generating a fastening component image and a non-fastening component image,
the fastening component image is clipped by the clipping rectangle for deep learning model of the first fixed rectangle around the reference point,
the non-fastening component image is clipped by the clipping rectangle for deep learning model of the second fixed rectangle having a size and a shape identical to the first fixed rectangle around an arbitrary point.

4. The recognition method according to Claim 1, wherein the clipping the fastening component of the disassembly target object for recognition from the image data for automatic disassembly as the fastening component image for fine recognition includes:
based on the learning data, setting a center of the tool hole of the fastening component as a reference point, obtaining a point on a fastening component outer shape that is longest from the reference point, obtaining a length of a straight line connecting the reference point and the point on the fastening component outer shape, and calculating a clipping rectangle for deep learning model with a length twice a length of the straight line as a length of each side;
based on the learning data, setting a center of the tool hole of the fastening component as a reference point, obtaining a point on a tool hole outer shape of the fastening component that is longest from the reference point, obtaining a length of a straight line connecting the reference point and the point on the tool hole outer shape, and calculating a clipping rectangle size with a length twice a length of the straight line as a length of each side; and
determining the third fixed rectangle within a range defined by the clipping rectangle for deep learning model as a maximum and the clipping rectangle size as a minimum, and performing clipping.

5. The recognition method according to any one of Claims 1 to 4, wherein the executing the fine recognition includes:
determining whether or not the fastening component image for fine recognition is the fastening component by using a fine recognition deep learning model created for fastening component detection,
the fine recognition deep learning model is trained in advance by learning an image of the fastening component in the fastening component image for fine recognition as fastening component data, and an image other than the fastening component as non-fastening component data, and classifying an input image as a heat map into the fastening component or the non-fastening component for each pixel.

6. The recognition method according to any one of Claims 1 to 4, wherein
the fastening component includes a plurality of fastening members having different diameters, and
at least one of the first fixed rectangle, the second fixed rectangle, and the third fixed rectangle is determined based on a fastening component having a maximum diameter among the plurality of fastening members.
